# EUROPEAN PATENT SPECIFICATION

(11) **EP 4 441 866 B1**
(45) Date of publication and mention of the grant of the patent: **02.12.2026**
(21) Application number: 22701110.3
(22) Date of filing: 05.01.2022
(51) Int. Cl.: H02J 15/50, F03D 9/00, F03B 13/26, H02J 3/38, C25B 1/04, C25B 15/00

(54) **SYSTEM AND METHOD OF CONSTRUCTING A PLANT ON A POWER ISLAND**
SYSTEM UND VERFAHREN ZUM BAU EINER ANLAGE AUF EINER KRAFTWERKSINSEL
SYSTÈME ET PROCÉDÉ DE CONSTRUCTION D'UNE INSTALLATION SUR UNE ÎLE ÉLECTRIQUE

(43) Date of publication of application: 09.10.2024
(73) Proprietor: Siemens Energy Global GmbH & Co. KG, 81739 München (DE)
(72) Inventor: HAUPT, Thomas, 96052 Bamberg (DE); STEINHOFF, Thorsten, 22043 Hamburg (DE); WEBER, Carolin, 20357 Hamburg (DE)
(74) Representative: HKW Intellectual Property PartG mbB
(86) International application number: PCT/US2022/011257
(87) International publication number: WO 2023/132821

(56) References cited:
- WO-A1-2019/183575
- DK-A1- 202 000 220
- ANONYMOUS: "Artificial island - Wikipedia", 22 September 2021 (2021-09-22), XP055952624, Retrieved from the Internet <URL:https://en.wikipedia.org/w/index.php?title=Artificial_island&oldid=1045874282> [retrieved on 20220818]

## Description

### BACKGROUND

The generation of large-scale offshore renewable energy often requires the construction of various facilities including power plants, power generation devices, transmission and other power conditioning equipment, and other auxiliaries or power consumers that may be desired. These facilities, collectively referred to as a plant can require significant space making them difficult to locate. One possible solution that is well-suited to taking advantage of off-shore renewable energy sources such as offshore wind power generation is to locate these facilities off-shore near the generation sites. These locations can be remote which greatly increases the challenges and difficulties of constructing the various facilities.

DK 2020 00220 A1 discloses offshore jack-up installation, comprising a hull and a plurality of moveable legs engageable with the seafloor. The offshore installation is arranged to move the legs with respect to the hull to position the hull out of the water when the legs engage the seafloor. The offshore jack-up installation may comprise a power distribution module connectable to at least one offshore renewable electricity generator; and a hydrogen generation module connected to the power distribution module.

WO 2019/183575 A1 discloses an installation including a plurality of pilings securable to a bed under a surface of a body of water, a base structure disposed atop the plurality of pilings, and a module disposable on the base structure. The module is positioned and securable on the base structure after being floated on the surface of the body of water over the base structure. Alternatively, the base structure may be ballasted to the bed or may be float and be secured to the bed via mooring lines.

### SUMMARY

The invention is defined by the attached set of claims. Further aspect and details of the disclosure are provided below and in the detailed description of embodiments, which are helpful for understanding the claimed invention.

In one aspect, a power system includes an offshore power generation source, an artificial island formed in proximity to the offshore power generation source and a power conditioning module formed as a single movable unit and positioned on the artificial island to receive power from the offshore power generation source. A power to gas module is formed as a single movable unit and positioned on the artificial island to receive power from the power conditioning module and produce a combustible gas, an energy consumer module formed as a single movable unit and positioned on the artificial island to consume power from the power conditioning module, and one of a storage system and a pipeline is coupled to the power to gas module and is operable to one of store and deliver the combustible gas to a combustible gas user.

In another aspect, a method of constructing a power system includes forming an artificial island in proximity to an offshore power generation source, forming a power conditioning module as a single movable unit remote from the artificial island, and forming an energy consumer module as a single movable unit remote from the artificial island. The method also includes transporting the power conditioning module to the artificial island as a single unit, transporting the energy consumer module to the artificial island as a single unit, and connecting the power conditioning module to the offshore power generation source to allow for the delivery of power from the offshore power generation source to the power conditioning module. The method further includes connecting the energy consumer module to the power conditioning module to allow the energy consumer module to consume power generated by the offshore power generation source.

In another aspect, a method of constructing a power system includes constructing a module at a first location, the module constructed as a single movable unit, and testing the operation of the module at the first location. The method also includes placing the module onto a transporter, the transporter operable to deliver the module over water to an artificial island that is disposed at a second location different from the first location, and positioning the module in an operating position with respect to the artificial island. The method further includes connecting the module to an offshore power generation source to operate the module.

The foregoing has broadly outlined some of the technical features of the present disclosure so that those skilled in the art may better understand the detailed description that follows. Additional features and advantages of the disclosure will be described hereinafter that form the subject of the claims.

Also, before undertaking the Detailed Description below, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

To easily identify the discussion of any particular element or act, the most significant digit or digits in a reference number refer to the figure number in which that element is first introduced.
FIG. 1 is a model of a plant located on an artificial island constructed near an offshore wind farm.
FIG. 2A schematically illustrates a first step in a process of delivering a module to the artificial island of FIG. 1.
FIG. 2B schematically illustrates a second step in the process of delivering the module to the artificial island of FIG. 1.
FIG. 2C schematically illustrates a third step in the process of delivering the module to the artificial island of FIG. 1.
FIG. 3A schematically illustrates a first step in a second process of delivering the module to the artificial island of FIG. 1.
FIG. 3B schematically illustrates a second step in the second process of delivering the module to the artificial island of FIG. 1.
FIG. 3C schematically illustrates a third step in the second process of delivering the module to the artificial island of FIG. 1.
FIG. 4A schematically illustrates a first step in a third process of delivering the module to the artificial island of FIG. 1.
FIG. 4B schematically illustrates a second step in the third process of delivering the module to the artificial island of FIG. 1.
FIG. 4C schematically illustrates a third step in the third process of delivering the module to the artificial island of FIG. 1.
FIG. 5A schematically illustrates a first step in a fourth process of delivering the module to the artificial island of FIG. 1.
FIG. 5B schematically illustrates a second step in the fourth process of delivering the module to the artificial island of FIG. 1.
FIG. 5C schematically illustrates a third step in the fourth process of delivering the module to the artificial island of FIG. 1.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

Energy or power islands 102 are sometimes formed offshore and in locations where the utilization of offshore renewable energy sources is efficient. Each power island 102 is sized to provide space for the required infrastructure and the integration of several types of energy generation (e.g., wind, solar, tidal), energy conversion (e.g., power-to-x such as power to hydrogen), energy transmission (e.g., high voltage DC (HVDC), high voltage AC), and energy storage (e.g., battery storage, thermal storage, etc.) at one location. Even consumers such as data centers are potentially located on such power islands 102.

Construction of a power island 102 including any of energy transmission (high voltage AC or HVDC), energy conversion (e.g., power to hydrogen), energy storage, or energy consumers (e.g., data centers) requires a significant effort to deliver materials and labor to the island. In some instances, construction of the facilities on the power island 102 could take more than 15 to 20 months. All materials need to be shipped individually to the power island 102, including the main materials like the plant key components (e.g., transformers, switchgear components, converter modules, etc.), but also the ancillary materials like steel, concrete, and construction machinery. In addition, effort is required to establish and maintain the accommodation and life-sustaining systems for hundreds of workers throughout the construction and installation period on the power island 102. In addition, the remote location of some power islands 102 (e.g., the North Sea) means that foreseeable and unforeseeable bad weather scenarios are to be expected. The weather scenarios may require planned and unplanned unmanning operations which results in additional costs and delays in the construction, testing, and commissioning of the various components and systems on the island.

Power islands 102 may be artificial in nature and as such may have additional costs for every additional square meter of area. Uncertainty when planning for the use of the space on the power island 102 (artificial islands) can lead to larger islands than required, thereby further increasing costs.

Every square-meter of island surface that needs to be constructed for an artificial island contributes significantly to the investment costs. Aiming to keep the consumed surface area as low as possible, the components may need to be arranged differently when compared to similar components installed at an onshore location. The prevailing harsh environmental conditions offshore may also require additional measures to be considered in the original design of the components such as arrangements to reduce or eliminate exposure to sea water, spray, or moist air.

Further, for an artificial island which is to be established as a newly built island in a short time, it is expected that some soil and sub-soil settlement will occur. It is therefore likely that the soil will not be capable of supporting some of the larger loads that may be desired. In these cases, deep-pile anchoring may be required. This will further contribute to the required costs and can also be a limiting factor for any space demand.

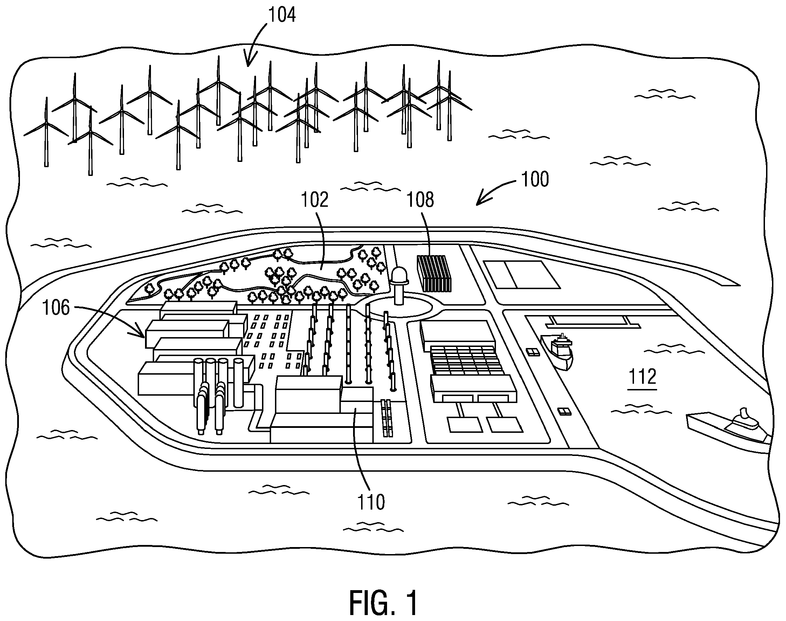

Typically, the construction period at an onshore location for all the components and features illustrated in FIG. 1 as part of the plant 100 might take twelve to fourteen months. Potentially, and as far as the available infrastructure on the power island 102 would allow, prefabricated modules may be utilized to reduce construction, testing, and commissioning efforts on the power island 102.

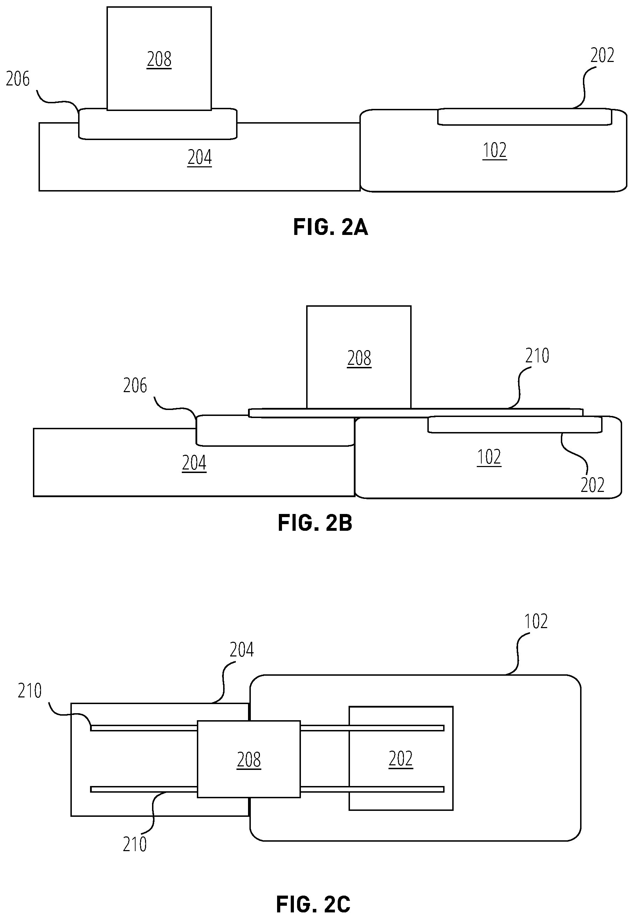

As will be described with regard to FIG. 1 through FIG. 5C, many of the components and facilities of the power island 102 are constructed as single modules or multiple modules that are then connected to one another as required (e.g., electrical connection via wires or cables, fuel or gas connections via pipes or tubes, and the like) when installed on the power island 102. The number of modules required is kept as low as possible to reduce the number of physical interfaces required during the installation process. Each module is equipped with relevant parts which are installed, pre-commissioned, and ideally pre-tested. A separate floater, referred to herein as a barge 206 (shown in FIG. 2A), which can be a cargo barge, a semisubmersible transport vessel, a catamaran vessel, and the like. The barge 206 is intended to take the complete load of one of the modules, or multiple modules along with any measures for loading, offloading, sea-transport which includes, grillages, stiffeners, mooring and rigging equipment, skid rails, skid equipment, etc., as well as facilities for ballasting and de-ballasting when required.

A defined interface for each module connects the module with its respective foundation on the power island 102 to secure and provide the required mechanical support for the module. The foundation works necessary on the power island 102 is therefore greatly reduced when compared to a new construction.

One possible solution to locating facilities such as power generation, power conditioning, power conversion (e.g., power to gas), and power usage (e.g., data storage facilities) is to locate the facilities on a remote island. FIG. 1 illustrates an example of a power island 102 located near an offshore power generation source 104 such as an offshore wind farm. Terms such as "near", "proximate", "in proximity", and the like when referring to the relative locations of the offshore power generation source 104 and the power island 102 should be interpreted to mean within a distance that allows for an easy connection without the need for conditioning of the power. In a typical installation this would be within 100 km.

The illustrated power island 102 is an artificial or man-made island that is constructed in a desired location in proximity to the offshore power generation source 104. Regular, natural, or preexisting islands could also fulfill the purpose of power island. Of course, other locations not adjacent offshore power generation sources 104 (e.g., wind, solar, tidal, etc.) could be employed as well. In addition, the power island 102 itself could include the power generation facility (e.g., gas turbine, or solar farm) located on the power island 102.

The illustrated power island 102 includes a number of facilities or modules including without limitation one or more power conditioning modules 106, energy consumers 108, and power to gas modules 110 that together define the plant 100. The power conditioning modules 106 could include transformers, rectifiers, inverters, switches, breakers, or any other power conditioning or transmitting equipment that might be desired for the offshore power generation source 104 or any other power generation source. In addition, the power conditioning modules 106 should include any components required to power the power to gas modules 110, the energy consumers 108, as well as any other power consumers that might be on the power island 102. Finally, the power conditioning modules 106 should include any components needed to transmit generated power from the offshore power generation source 104 to the shore or to other users located remotely from the power island 102. It should be noted that no module is required, and each module could be independent of the other modules if desired.

The power to gas module 110 could include one or more modules arranged to use electrical power provided by the offshore power generation source 104irectly or via the power conditioning modules 106 to produce a usable gas such as hydrogen. The power to gas modules 110 could include electrolysis modules that utilize water from around the power island 102 as an input to produce the hydrogen. The hydrogen gas could be piped to another location, could be stored in some manner, or could be cooled and compressed for storage or shipment as a compressed cryogenic liquid. While the power island 102 of FIG. 1 includes one or more power to gas modules 110, other constructions may use other modules that use excess power to store energy in another form. For example, the excess power could be used to store compressed air or otherwise store energy (e.g., batteries).

The energy consumers 108 could include data centers or other types of energy consumers that consume energy on a steady basis. Data centers are particularly suitable in this application as they generally consume a steady load but can be located virtually anywhere without adversely affecting their performance.

A harbor 112 may be provided to service the various modules and any people working on the power island 102. The harbor 112 may be constructed as part of the power island 102 or may be a pre-existing structure.

As discussed herein, construction on the power island 102 and in particular on a power island 102 that is located remotely from a mainland can be very costly. Housing employees, shipping food and construction materials, working in difficult weather conditions, and the like are all costly and slow. In particular, weather can cause delays that would be otherwise avoided if the construction were occurring on a mainland or non-remote site.

In the illustrated constructions, the power conditioning modules 106, the energy consumers 108, the power to gas modules 110, and many other components are manufactured as complete or near complete components in locations other than the power island 102 where their construction is more efficient. The construction for many of the modules is complete and includes operational testing and commissioning such that only the installation onto a foundation and connection with outside supplies or output distribution (e.g., gas pipelines, high-power connections, control systems, etc.) is needed.

Once completed, the modules can be shipped to the power island 102 as a single component and installed in their operating positions. This greatly reduces the time and effort spent on the power island 102 which in turn reduces the cost involved in creating and operating the power island 102 and reduces the overall time required to establish operation of the power island 102. However, it is important to note that these completed modules can be quite large and may weigh in excess of 20,000 tons (18,000 metric tons).

FIG. 2A through FIG. 2C illustrate one way to ship or deliver a module 208 to the power island 102. With reference to FIG. 2A, a foundation 202 or other structure suitable for use in receiving and operating the module 208 is formed or positioned on the power island 102. The foundation 202 may be a simple concrete slab or could include complex supports, piping, plumbing or any number of other features that the module 208 will connect to for operation. The module 208 is placed on a vessel or barge 206 that floats on the body of water 204 that surrounds the power island 102. The barge 206 is delivered to or arrives at the power island 102 where it is moored as illustrated in FIG. 2B.

As illustrated in FIG. 2B, a transport device 210 is positioned to enable the removal of the module 208 from the barge 206 and deliver it over the power island 102 to its ultimate operating position on the foundation 202.

FIG. 2C better illustrates the transport device 210 includes a pair of parallel rails (e.g., skid rails) that extend from the barge 206 to the foundation 202. The transport device 210 in the form of the rails could be a permanent part of the foundation 202 or could be removed after the delivery and installation of the module 208. Of course, other transport devices 210 could be employed if desired. For example, cranes, forklifts, jacking mechanisms, trucks and the like could be employed alone or in conjunction with one another to deliver the module 208 from the barge 206 to the transport device 210.

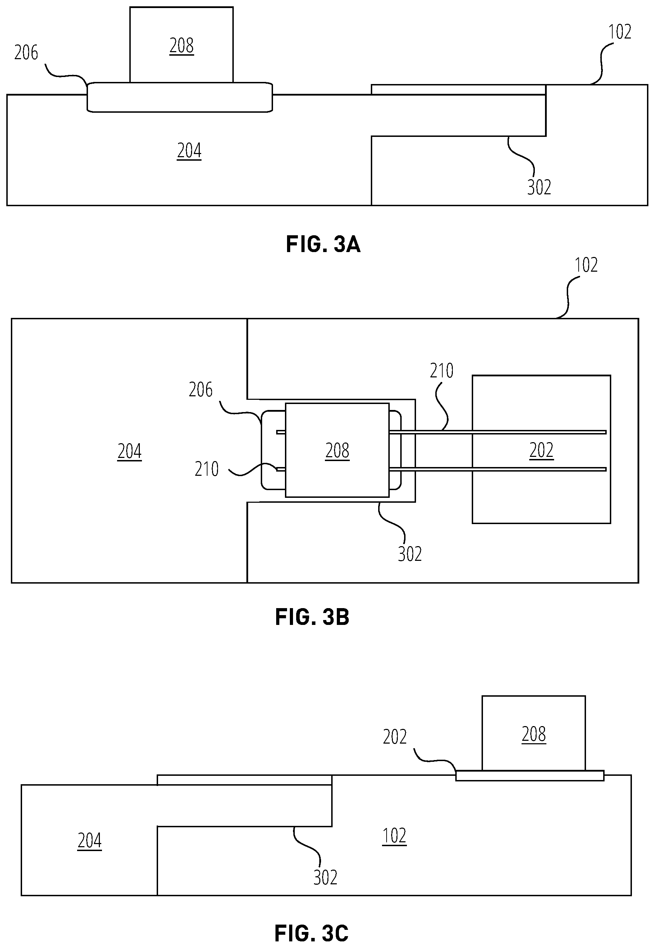

FIG. 3A through FIG. 3C illustrate another arrangement for delivering the module 208 to the power island 102. As illustrated in FIG. 3A, the module 208 is placed on the barge 206 as illustrated in FIG. 2A and is floated or otherwise delivered to the power island 102 as previously described. However, rather than mooring the barge 206 to the power island 102, the barge 206 is first positioned within an offload space 302. The term offload space should be broadly interpreted to include a space that may be sealed, sealed and drained, or simply enclosed on three sides and sized to receive the barge 206. The offload space 302 could include a dry dock or simply a flooded space sized to receive the barge 206.

Once the barge 206 is positioned in the offload space 302 as illustrated in FIG. 3B, the transport device 210 is used to unload the module 208 as described with regard to FIG. 2B and FIG. 2C.

The module 208 is then moved to the foundation 202 as illustrated in FIG. 3C where it is positioned for operation as previously described.

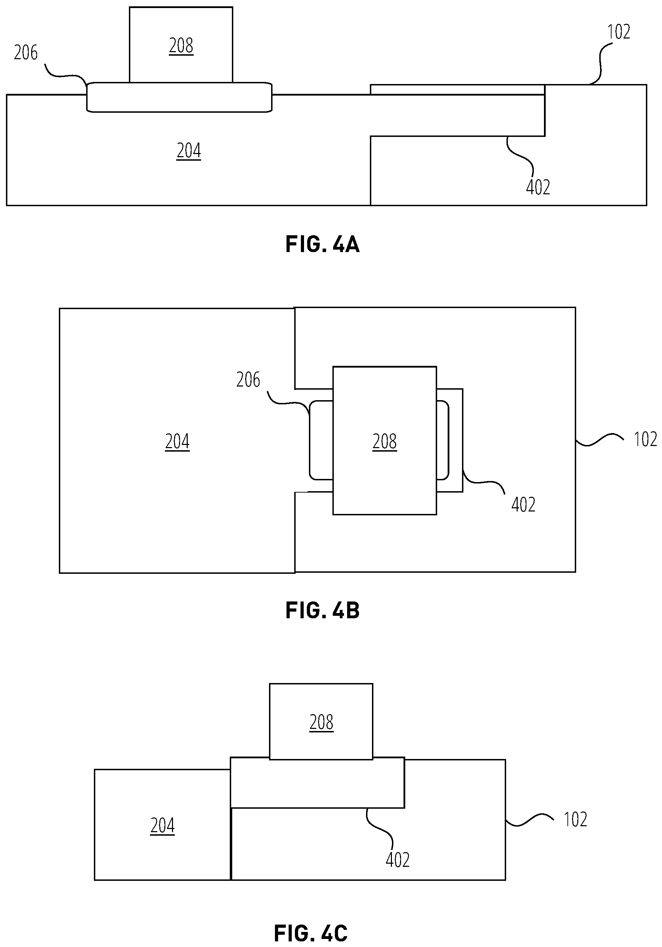

FIG. 4A through FIG. 4C illustrate yet another system and method for delivering modules 208 to the power island 102. With reference to FIG. 4A, the module 208 is positioned on a barge 206 as previously described.

Upon arrival at the power island 102, the barge 206 is positioned within an offload space 402 as illustrated in FIG. 4B. As can be seen, the width of the offload space 402 is smaller than the width of the module 208 such that the module extends beyond the offload space 402 on both sides of the barge 206.

With reference to FIG. 4C, the barge 206 is lowered, the water level within the offload space 402 is lowered or supports or other mechanisms are employed to lift the module 208 off the barge 206 to allow for the removal of the barge 206. With the barge 206 removed, the module 208 is fully supported by the power island 102 around the edges of the offload space 402. Specifically, the walls of the offload space 402 serve as a foundation to support the module 208. In some constructions, nothing more is done to support the module 208. However, other constructions may fill in the offload space 402 with materials that enhance the support of the module 208 as may be required. In still other constructions, the offload space 402 is sealed and the water is removed to provide space below the module 208 for connecting to the module 208 for operation.

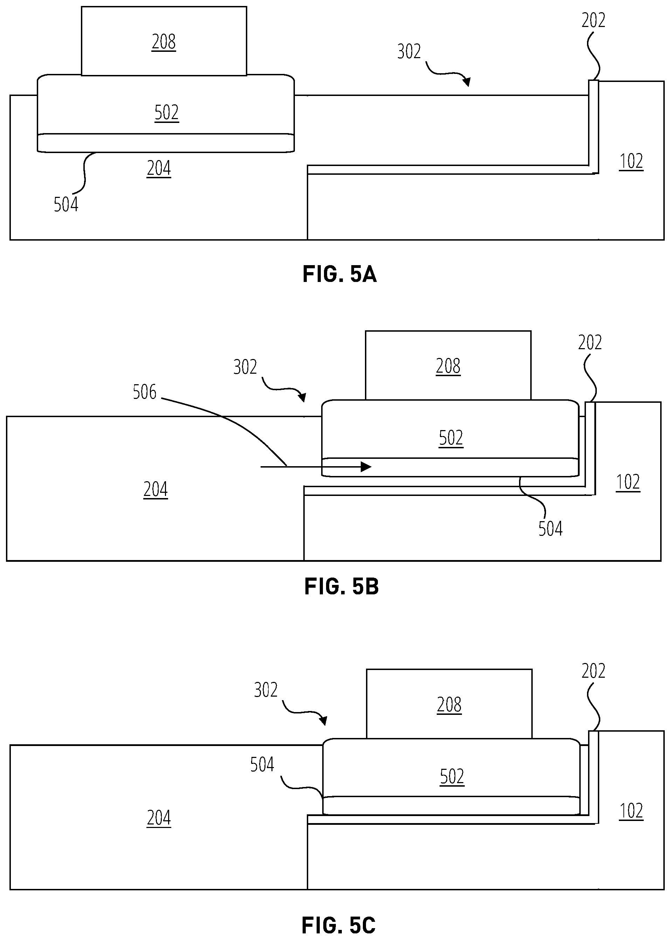

FIG. 5A through FIG. 5C illustrate another system and method for delivering modules 208 to the power island 102. However, rather than positioning the module 208 on a barge 206 as previously described, the module 208 is transported using a sinkable transporter 502 shown in FIG. 5A. The sinkable transporter 502 includes a ballast chamber 504 that can be selectively filled with a ballast material such as sand or water to selectively sink or float the sinkable transporter 502. In some constructions, the sinkable transport 502 is formed as part of or connected to the module 208 such that the sinkable transport 502 forms part of the module 208 after it is submerged into its operating position.

An offload space 302 is formed in the power island 102 and includes a foundation 202 that defines at least a bottom portion of the offload space 302.

As shown in FIG. 5B, the sinkable transporter 502 is floated into the offload space 302 and positioned in a desired position. Ballast 506 is drawn into or added to the ballast chamber 504 to increase the weight of the sinkable transporter 502, thereby reducing the buoyancy of the sinkable transporter 502 and slowly sinking it until it rests upon the foundation 202.

With the sinkable transporter 502 resting on the foundation 202 as illustrated in FIG. 5C, the module 208 is in a final operating position. The offload space 302 can be sealed and the water removed, sealed with the water remaining or left open to the body of water 204. In this arrangement, the sinkable transporter 502 becomes part of the foundation or support arrangement for the module 208.

It should be noted that each of the processes described for delivering a module 208 to the power island 102 can be reversed to remove the module 208 such as when the power island 102 is decommissioned.

Once the module 208 is positioned in its desired operating position, any external connections that are needed can be made. For example, if the module 208 is a power to gas module 110, a power input connection from the power conditioning modules 106 may be required. In addition, an outlet pipeline for delivering the generated gas (e.g., hydrogen) should also be connected to the module 208. As one of ordinary skill will realize, different modules 208 will require different connections to complete the assembly of the plant 100 on the power island 102.

It should be noted that all the components or facilities of a particular power island 102 together define the plant 100. Those components could include one or more of energy generation, energy conversion, energy transmission assets (e.g., high voltage AC, HVDC), or energy production or conversion units such as Hydrogen electrolyzer modules. The plant 100 in this context is to be understood as the complete station including housing required to maintain all necessary equipment (e.g., high voltage equipment), together with any auxiliary equipment required to secure the proper function of the plant 100 (e.g, HVDC converter station). It further includes the required auxiliary power systems, cooling systems, heating, ventilation and air condition systems, necessary building systems (e.g., such as fire detection and fire-fighting systems) and any other systems that may be desired.

The type of artificial island is not critical to the construction of the plant 100. The power island 102 can be a sand-filled island, a caisson island, or other type of artificial island. Additionally, many of the aspects described herein could be applied to a naturally occurring island as well.

As discussed, barges 206 or sinkable transporters 502 can be employed to deliver modules 208 to the power island 102. These barges 206 and sinkable transporters 502 should be interpreted broadly to include any vessel capable of delivering a module 208 over a body of water 204 to the power island 102.

As discussed, once at the island, the barge 206 is moored by any provision at or in front of a suitable load-out facility (e.g., a quay). A skidding process (minimum one skidding rail) may be utilized to move the module 208 onto the prepared foundation 202 on the power island 102. In other arrangements, as discussed earlier, de-ballasting can be employed to off-load the barge 206. To do so, the power island 102 should include a suitable facility, broadly described herein as offload spaces 302. The term offload space, as used herein is meant to include any suitable de-ballasting facility as well as conventional offload spaces.

In some constructions, some or all the modules 106, 108, 110, can be built as a "turnkey-unit" in a fabrication yard onshore, there is no need for an extensive offshore site for construction works. The installation of all required industrial components (required for the functionality of the modules 208 such as for HVDC converter stations, the converters, transformers, switchgear, cabling etc.) will be performed onshore in the fabrication yard under controlled environmental conditions. Many of the components can be pre-tested and pre-commissioned onshore before delivery.

In some arrangements of the power island 102, many of the modules 208 have a corresponding offload space 302. In particular, constructions that use the offload process illustrated in FIG. 4A through FIG. 5C include such one-to-one correspondence between the modules 208 and the offload space 302.

Although an exemplary embodiment of the present disclosure has been described in detail, those skilled in the art will understand that various changes, substitutions, variations, and improvements disclosed herein may be made without departing from the scope of the disclosure which is defined by the appended claims.

## Claims

1. A power system comprising:
an offshore power generation source (104), wherein the offshore power generation source (104) includes one of a plurality of offshore wind turbines and a plurality of tidal power generators;
an artificial island (102) formed in proximity to the offshore power generation source;
a power conditioning module (106) formed as a single movable unit and positioned on the artificial island (102) to receive power from the offshore power generation source;
a power to gas module (110) formed as a single movable unit and positioned on the artificial island (102) to receive power from the power conditioning module (106) and produce a combustible gas;
an energy consumer module (108) formed as a single movable unit and positioned on the artificial island (102) to consume power from the power conditioning module (106); and
one of a storage system and a pipeline coupled to the power to gas module (110) and operable to one of store and deliver the combustible gas to a combustible gas user;
**characterized in that**, for each of the power conditioning module (106), the power to gas module (110) and the energy consumer module (108), a foundation (202) is formed or positioned on the artificial island (102) for receiving the respective module, each of the modules is equipped with relevant parts which are installed, pre-commissioned, and pre-tested, and a defined interface for each module connects the respective module with its respective foundation (202) on the artificial island (102) to secure and provide the required mechanical support for the module.

2. The power system of claim 1, wherein the power conditioning module (106) includes a transformer for a high voltage AC transmission system.

3. The power system of claim 1 or 2, wherein the power conditioning module (106) includes a transformer, switchgear, and one of an inverter and a rectifier for a high voltage DC transmission system.

4. The power system of any of claims 1-3, wherein the power to gas module (110) operates to use power provided by the power conditioning module (106) to produce hydrogen.

5. The power system of any of claims 1-4, wherein the energy consumer module (108) includes one of a data center and an energy storage device.

6. The power system of any one of claims 1-5, wherein a transport device (210) is positioned to enable the removal of one of the modules (208) from a barge (206) when the barge (206) transporting the respective module (208) is moored at the artificial island (102) or positioned within an offload space (302) of the artificial island (102), the transport device (210) being further configured to deliver the respective module (208) over the artificial island (102) to its ultimate operating position on the respective foundation (202), wherein the transport device (210) includes a pair of parallel rails form a permanent part of the foundation (202).

7. The power system of any one of claims 1-5, wherein the artificial island (102) further comprises an offload space (302, 402), and wherein one of the power conditioning module (106), the power to gas module (110), and the energy consumer module (108) defines a supported module (208), the offload space (302, 402) comprises one of a dry dock or a flooded space sized to receive a transporter that is operable transport the supported module (208) as a single component and to float into a desired position within the offload space (302, 402).

8. The power system of claim 7, wherein the transporter is a sinkable transporter (502), the sinkable transport 502 is formed as part of or connected to the supported module (208), and at least one of the plurality of foundations (202) defines at least a bottom portion of the offload space (302), such that, when ballast (506) is added to the sinkable transporter (502) to at least partially submerge the sinkable transporter (502) within the offload space (302), the supported module (208) is positioned in a final operating position on the sinkable transporter (502) within the offload space (302).

9. The power system of claim 7 or 8, wherein the offload space (402) defines a first width and the supported module (208) defines a second width greater than the first width, and extends beyond the offload space (402) on both sides of the transporter such that, when the transporter is removed, the supported module (208) is supported over the offload space (402).

10. A method of constructing a power system, the method comprising:
forming an artificial island (102) in proximity to an offshore power generation source (104), wherein the offshore power generation source (104) includes one of a plurality of offshore wind turbines and a plurality of tidal power generators;
forming or positioning a first foundation (202) on the artificial island (102) for receiving the power conditioning module (106);
forming or positioning a second foundation (202) on the artificial island (102) for receiving the energy consumer module (108);
forming a power conditioning module (106) as a single movable unit remote from the artificial island (102), the power conditioning module (106) being equipped with relevant parts which are installed, pre-commissioned, and pre-tested, and a defined first interface;
forming an energy consumer module (108) as a single movable unit remote from the artificial island (102), the energy consumer module (108) being equipped with relevant parts which are installed, pre-commissioned, and pre-tested, and a defined second interface;
transporting the power conditioning module (106) to the artificial island (102) as a single unit;
transporting the energy consumer module (108) to the artificial island (102) as a single unit;
connecting the power conditioning module (106) via the first interface with the first foundation (202) on the artificial island (102) to secure and provide the required mechanical support for the power conditioning module (106) and to connect the power conditioning module (106) to the offshore power generation source (104) to allow for the delivery of power from the offshore power generation source (104) to the power conditioning module (106); and
connecting the energy consumer module (108) via the second interface with the second foundation (202) on the artificial island (102) to secure and provide the required mechanical support for the energy consumer module (108) and to connect the energy consumer module (108) to the power conditioning module (106) to allow the energy consumer module (108) to consume power generated by the offshore power generation source (104).

11. The method of claim 10, wherein the power conditioning module (106) includes a transformer, switchgear, and one of an inverter and a rectifier for a high voltage DC transmission system.

12. The method of claim 10 or 11, wherein at least one of the power conditioning module (106) and the energy consumer module (108) is transported on a barge (206) to the artificial island (102), the method further comprising:
mooring the barge (206) transporting the respective module (208) at the artificial island (102) or positioned the barge (206) within an offload space (302) of the artificial island (102);
positioning a transport device (210) so as to enable the removal of the respective module (208) from the barge (206), wherein the transport device (210) includes a pair of parallel rails form a permanent part of the foundation (202); and
deliver the respective module (208) over the artificial island (102) to its ultimate operating position on the respective foundation (202) using the transport device (210).

13. The method of claim 10 or 11, further comprising forming an offload space (302, 402) as part of the artificial island (102), and positioning one of the power conditioning module (106), a power to gas module (110), and the energy consumer module (108) in an operating position that traverses a portion of the offload space (302, 402).

14. The method of claim 10 or 11, further comprising forming an offload space (302, 402) as part of the artificial island (102), and floating at least one of the power conditioning module (106), a power to gas module (110), and the energy consumer module (108) into a desired position within the offload space (302, 402) on a transporter.

15. The method of claim 14, wherein the transporter is a sinkable transporter (502), the method further comprising adding ballast (506) to the sinkable transporter (502) to at least partially submerge the sinkable transporter (502) within the offload space (302) to position the one of the power conditioning module (106), the power to gas module (110), and the energy consumer module (108) in a final operating position on the sinkable transporter (502) within the offload space (302).

## Patentansprüche

1. Leistungssystem, umfassend:
eine Offshore-Leistungserzeugungsquelle (104), wobei die Offshore-Leistungserzeugungsquelle (104) entweder eine Vielzahl von Offshore-Windkraftanlagen oder eine Vielzahl von Gezeitenleistungsgeneratoren umfasst;
eine künstliche Insel (102), die in der Nähe der Offshore-Leistungserzeugungsquelle ausgebildet ist;
ein Leistungsaufbereitungsmodul (106), das als eine einzelne bewegliche Einheit ausgebildet und auf der künstlichen Insel (102) positioniert ist, um Leistung von der Offshore-Leistungserzeugungsquelle zu empfangen;
ein Leistung-zu-Gas-Modul (110), das als eine einzelne bewegliche Einheit ausgebildet und auf der künstlichen Insel (102) positioniert ist, um Leistung von dem Leistungsaufbereitungsmodul (106) zu empfangen und ein brennbares Gas zu erzeugen;
ein Energieverbrauchsmodul (108), das als eine einzelne bewegliche Einheit ausgebildet und auf der künstlichen Insel (102) positioniert ist, um Leistung aus dem Leistungsaufbereitungsmodul (106) zu verbrauchen; und
entweder ein Speichersystem oder eine Pipeline, die mit dem Leistung-zu-Gas-Modul (110) gekoppelt sind und dazu dienen, das brennbare Gas entweder zu speichern oder an einen Verbraucher von brennbarem Gas zu liefern;
**dadurch gekennzeichnet, dass** jeweils für das Leistungsaufbereitungsmodul (106), das Leistung-zu-Gas-Modul (110) und das Energieverbrauchsmodul (108) ein Fundament (202) auf der künstlichen Insel (102) ausgebildet oder positioniert ist, um das jeweilige Modul aufzunehmen, jedes der Module mit entsprechenden Teilen ausgestattet ist, die installiert, vorab in Betrieb genommen und vorab getestet wurden, und eine definierte Schnittstelle für jedes Modul das jeweilige Modul mit seinem jeweiligen Fundament (202) auf der künstlichen Insel (102) verbindet, um das Modul zu sichern und die erforderliche mechanische Stützung bereitzustellen.

2. Leistungssystem nach Anspruch 1, wobei das Leistungsaufbereitungsmodul (106) einen Transformator für ein Hochspannungs-Wechselstromübertragungssystem umfasst.

3. Leistungssystem nach Anspruch 1 oder 2, wobei das Leistungsaufbereitungsmodul (106) einen Transformator, eine Schaltanlage und entweder einen Wechselrichter oder einen Gleichrichter für ein Hochspannungs-Gleichstromübertragungssystem umfasst.

4. Leistungssystem nach einem der Ansprüche 1 bis 3, wobei das Leistung-zu-Gas-Modul (110) dazu dient, von dem Leistungsaufbereitungsmodul (106) gelieferte Leistung zur Erzeugung von Wasserstoff zu nutzen.

5. Leistungssystem nach einem der Ansprüche 1 bis 4, wobei das Energieverbrauchsmodul (108) entweder ein Rechenzentrum oder eine Energiespeichervorrichtung umfasst.

6. Leistungssystem nach einem der Ansprüche 1 bis 5, wobei eine Transportvorrichtung (210) so positioniert ist, dass sie das Entladen eines der Module (208) von einem Lastkahn (206) ermöglicht, wenn der Lastkahn (206), der das jeweilige Modul (208) transportiert, an der künstlichen Insel (102) festgemacht oder innerhalb eines Entladebereichs (302) der künstlichen Insel (102) positioniert ist, wobei die Transportvorrichtung (210) ferner so ausgelegt ist, dass sie das jeweilige Modul (208) über die künstliche Insel (102) zu seiner endgültigen Betriebsposition auf dem jeweiligen Fundament (202) transportiert, wobei die Transportvorrichtung (210) ein Paar paralleler Schienen umfasst, die einen festen Bestandteil des Fundaments (202) bilden.

7. Leistungssystem nach einem der Ansprüche 1 bis 5, wobei die künstliche Insel (102) ferner einen Entladebereich (302, 402) umfasst und wobei entweder das Leistungsaufbereitungsmodul (106), das Leistung-zu-Gas-Modul (110) oder das Energieverbrauchsmodul (108) ein gestütztes Modul (208) definiert, wobei der Entladebereich (302, 402) entweder ein Trockendock oder einen gefluteten Bereich umfasst, der so bemessen ist, dass er einen Transporter aufnehmen kann, der dazu dient, das gestützte Modul (208) als einzelne Komponente zu transportieren und in eine gewünschte Position innerhalb des Entladebereichs (302, 402) zu schwimmen.

8. Leistungssystem nach Anspruch 7, wobei der Transporter ein versenkbarer Transporter (502) ist, der versenkbare Transporter (502) als Teil des gestützten Moduls (208) ausgebildet oder mit diesem verbunden ist, und mindestens eines der Vielzahl von Fundamenten (202) zumindest einen Bodenabschnitt des Entladebereichs (302) bildet, so dass, wenn Ballast (506) auf den versenkbaren Transporter (502) aufgebracht wird, um den versenkbaren Transporter (502) zumindest teilweise in den Entladebereich (302) einzutauchen, das gestützte Modul (208) in einer endgültigen Betriebsposition auf dem versenkbaren Transporter (502) innerhalb des Entladebereichs (302) positioniert wird.

9. Leistungssystem nach Anspruch 7 oder 8, wobei der Entladebereich (402) eine erste Breite definiert und das gestützte Modul (208) eine zweite Breite definiert, die größer ist als die erste Breite, und sich auf beiden Seiten des Transporters über den Entladebereich (402) hinaus erstreckt, sodass das gestützte Modul (208) über dem Entladebereich (402) gestützt wird, wenn der Transporter entfernt wird.

10. Verfahren zum Aufbauen eines Leistungssystems, wobei das Verfahren umfasst:
Ausbilden einer künstlichen Insel (102) in der Nähe einer Offshore-Leistungserzeugungsquelle (104), wobei die Offshore-Leistungserzeugungsquelle (104) entweder eine Vielzahl von Offshore-Windkraftanlagen oder eine Vielzahl von Gezeitenleistungsgeneratoren umfasst;
Ausbilden oder Positionieren eines ersten Fundaments (202) auf der künstlichen Insel (102) zum Aufnehmen des Leistungsaufbereitungsmoduls (106);
Ausbilden oder Positionieren eines zweiten Fundaments (202) auf der künstlichen Insel (102) zum Aufnehmen des Energieverbrauchsmoduls (108);
Ausbilden eines Leistungsaufbereitungsmoduls (106) als eine einzelne bewegliche Einheit, die von der künstlichen Insel (102) entfernt ist, wobei das Leistungsaufbereitungsmodul (106) mit relevanten Teilen, die installiert, vorab in Betrieb genommen und vorab getestet wurden, sowie mit einer definierten ersten Schnittstelle ausgestattet ist;
Ausbilden eines Energieverbrauchsmoduls (108) als eine einzelne bewegliche Einheit, die von der künstlichen Insel (102) entfernt ist, wobei das Energieverbrauchsmodul (108) mit den relevanten Teilen, die installiert, vorab in Betrieb genommen und vorab getestet wurden, sowie mit einer definierten zweiten Schnittstelle ausgestattet ist;
Transportieren des Leistungsaufbereitungsmoduls (106) als eine einzelne Einheit zu der künstlichen Insel (102);
Transportieren des Energieverbrauchsmoduls (108) als eine einzelne Einheit zu der künstlichen Insel (102);
Verbinden des Leistungsaufbereitungsmoduls (106) über die erste Schnittstelle mit dem ersten Fundament (202) auf der künstlichen Insel (102), um das Leistungsaufbereitungsmodul (106) zu befestigen und die erforderliche mechanische Stützung bereitzustellen sowie um das Leistungsaufbereitungsmodul (106) mit der Offshore-Leistungserzeugungsquelle (104) zu verbinden, um die Lieferung von Leistung von der Offshore-Leistungserzeugungsquelle (104) zum Leistungsaufbereitungsmodul (106) zu ermöglichen; und
Verbinden des Energieverbrauchsmoduls (108) über die zweite Schnittstelle mit dem zweiten Fundament (202) auf der künstlichen Insel (102), um das Energieverbrauchsmodul (108) zu befestigen und die erforderliche mechanische Stützung bereitzustellen sowie das Energieverbrauchsmodul (108) mit dem Leistungsaufbereitungsmodul (106) zu verbinden, damit das Energieverbrauchsmodul (108) von der Offshore-Leistungserzeugungsquelle (104) erzeugte Leistung verbrauchen kann.

11. Verfahren nach Anspruch 10, wobei das Leistungsaufbereitungsmodul (106) einen Transformator, eine Schaltanlage und entweder einen Wechselrichter oder einen Gleichrichter für ein Hochspannungs-Gleichstromübertragungssystem umfasst.

12. Verfahren nach Anspruch 10 oder 11, wobei das Leistungsaufbereitungsmodul (106) und/oder das Energieverbrauchsmodul (108) auf einem Lastkahn (206) zu der künstlichen Insel (102) transportiert wird, wobei das Verfahren ferner umfasst:
Festmachen des Lastkahns (206), der das jeweilige Modul (208) transportiert, an der künstlichen Insel (102) oder Positionieren des Lastkahns (206) innerhalb eines Entladebereichs (302) der künstlichen Insel (102);
Positionieren einer Transportvorrichtung (210), um das Entfernen des jeweiligen Moduls (208) von dem Lastkahn (206) zu ermöglichen, wobei die Transportvorrichtung (210) ein Paar paralleler Schienen umfasst, die einen festen Bestandteil des Fundaments (202) bilden; und
Liefern des jeweiligen Moduls (208) über die künstliche Insel (102) an seine endgültige Betriebsposition auf dem jeweiligen Fundament (202) unter Verwendung der Transportvorrichtung (210).

13. Verfahren nach Anspruch 10 oder 11, ferner umfassend Ausbilden eines Entladebereichs (302, 402) als Teil der künstlichen Insel (102) und Positionieren entweder des Leistungsaufbereitungsmoduls (106) , eines Leistung-zu-Gas-Moduls (110) oder des Energieverbrauchsmoduls (108) in einer Betriebsposition, die einen Abschnitt des Entladebereichs (302, 402) durchquert.

14. Verfahren nach Anspruch 10 oder 11, ferner umfassend Ausbilden eines Entladebereichs (302, 402) als Teil der künstlichen Insel (102) und schwimmendes Befördern des Leistungsaufbereitungsmoduls (106) und/oder eines Leistung-zu-Gas-Moduls (110) und/oder des Energieverbrauchsmoduls (108) zu einer gewünschten Position innerhalb des Entladebereichs (302, 402) auf einem Transporter.

15. Verfahren nach Anspruch 14, wobei der Transporter ein versenkbarer Transporter (502) ist, wobei das Verfahren ferner Aufbringen von Ballast (506) auf den versenkbaren Transporter (502) umfasst, um den versenkbaren Transporter (502) zumindest teilweise in den Entladebereich (302) einzutauchen, um entweder das Leistungsaufbereitungsmodul (106), das Leistung-zu-Gas-Modul (110) oder das Energieverbrauchsmodul (108) in eine endgültige Betriebsposition auf dem versenkbaren Transporter (502) innerhalb des Entladebereichs (302) zu bringen.

## Revendications

1. Système d'alimentation en énergie comprenant :
une source de production d'énergie en mer (104), laquelle source de production d'énergie en mer (104) comporte une pluralité d'éoliennes en mer ou bien une pluralité de générateurs d'énergie marémotrice ;
une île artificielle (102) formée à proximité de la source de production d'énergie en mer ;
un module de conditionnement d'énergie (106) se présentant sous la forme d'une unité mobile unique et positionné sur l'île artificielle (102) pour recevoir de l'énergie en provenance de la source de production d'énergie en mer ;
un module énergie/gaz (110) se présentant sous la forme d'une unité mobile unique et positionné sur l'île artificielle (102) pour recevoir de l'énergie en provenance du module de conditionnement d'énergie (106) et pour produire un gaz combustible ;
un module consommateur d'énergie (108) se présentant sous la forme d'une unité mobile unique et positionné sur l'île artificielle (102) pour consommer de l'énergie provenant du module de conditionnement d'énergie (106) ; et
un système de stockage ou bien un pipeline couplé au module énergie/gaz (110) et utilisable pour stocker ou bien distribuer le gaz combustible à un utilisateur de gaz combustible ;
**caractérisé en ce que**, pour chacun du module de conditionnement d'énergie (106), du module énergie/gaz (110) et du module consommateur d'énergie (108), une fondation (202) est formée ou positionnée sur l'île artificielle (102) pour recevoir le module respectif, chacun des modules étant muni de pièces adéquates qui sont installées, pré-mises en service et pré-testées, et d'une interface définie pour chaque module relie le module respectif à sa fondation respective (202) sur l'île artificielle (102) pour sécuriser et fournir le support mécanique requis pour le module.

2. Système d'alimentation en énergie selon la revendication 1, dans lequel le module de conditionnement d'énergie (106) comporte un transformateur pour un système de transmission à courant alternatif haute tension.

3. Système d'alimentation en énergie selon la revendication 1 ou 2, dans lequel le module de conditionnement d'énergie (106) comporte un transformateur, un dispositif de commutation et un onduleur ou bien un redresseur pour un système de transmission à courant continu haute tension.

4. Système d'alimentation en énergie selon l'une quelconque des revendications 1 à 3, dans lequel le module énergie/gaz (110) fonctionne de manière à utiliser l'énergie fournie par le module de conditionnement d'énergie (106) pour produire de l'hydrogène.

5. Système d'alimentation en énergie selon l'une quelconque des revendications 1 à 4, dans lequel le module consommateur d'énergie (108) comprend un centre de données ou bien un dispositif de stockage d'énergie.

6. Système d'alimentation en énergie selon l'une quelconque des revendications 1 à 5, dans lequel un dispositif de transport (210) est positionné de manière à permettre le retrait de l'un des modules (208) d'une barge (206) lorsque la barge (206) transportant le module (208) respectif est amarrée à l'île artificielle artificiel (102) ou positionnée dans un espace de déchargement (302) de l'île artificielle (102), le dispositif de transport (210) étant en outre configuré pour acheminer le module respectif (208) sur l'île artificielle (102) jusqu'à sa position de fonctionnement finale sur la fondation respective (202), le dispositif de transport (210) comportant une paire de rails parallèles formant une partie permanente de la fondation (202).

7. Système d'alimentation en énergie selon l'une quelconque des revendications 1 à 5, dans lequel l'île artificielle (102) comprend en outre un espace de déchargement (302, 402), et dans lequel l'un du module de conditionnement d'énergie (106), du module énergie/gaz (110) et du module consommateur d'énergie (108) définit un module supporté (208), l'espace de déchargement (302, 402) comprend une cale sèche ou bien un espace inondé dimensionné pour recevoir un transporteur qui peut être utilisé pour transporter le module supporté (208) en tant que composant unique et pour flotter dans une position souhaitée à l'intérieur de l'espace de déchargement (302, 402).

8. Système d'alimentation en énergie selon la revendication 7, dans lequel le transporteur est un transporteur submersible (502), lequel transport submersible (502) est formé en tant que partie du module supporté (208) ou est connecté à celui-ci, et au moins l'une de la pluralité de fondations (202) définit au moins une partie de fond de l'espace de déchargement (302), de sorte que, lorsque du lest (506) est ajouté au transporteur submersible (502) pour immerger au moins partiellement le transporteur submersible (502) dans l'espace de déchargement (302), le module supporté (208) est positionné dans une position de fonctionnement finale sur le transporteur submersible (502) à l'intérieur de l'espace de déchargement (302).

9. Système d'alimentation en énergie selon la revendication 7 ou 8, dans lequel l'espace de déchargement (402) définit une première largeur et le module supporté (208) définit une seconde largeur supérieure à la première largeur, et s'étend au-delà de l'espace de déchargement (402) des deux côtés du transporteur de telle sorte que, lorsque le transporteur est retiré, le module supporté (208) soit supporté au-dessus de l'espace de déchargement (402).

10. Procédé de construction d'un système d'alimentation en énergie, le procédé comprenant :
la formation d'une île artificielle (102) à proximité d'une source de production d'énergie en mer (104), laquelle source de production d'énergie en mer (104) comporte une pluralité d'éoliennes en mer ou bien une pluralité de générateurs d'énergie marémotrice ;
la formation ou le positionnement d'une première fondation (202) sur l'île artificielle (102) pour recevoir le module de conditionnement d'énergie (106) ;
la formation ou le positionnement d'une deuxième fondation (202) sur l'île artificielle (102) pour recevoir le module consommateur d'énergie (108) ;
la formation d'un module de conditionnement d'énergie (106) sous la forme d'une unité mobile unique à distance de l'île artificielle (102), le module de conditionnement d'énergie (106) étant muni de pièces adéquates qui sont installées, pré-mises en service et pré-testées, et d'une première interface définie ;
la formation d'un module consommateur d'énergie (108) sous la forme d'une unité mobile unique à distance de l'île artificielle (102), le module consommateur d'énergie (108) étant muni de pièces adéquates qui sont installées, pré-mises en service et pré-testées, et d'une deuxième interface définie ;
le transport du module de conditionnement d'énergie (106) jusqu'à l'île artificielle (102) en un seul bloc ;
le transport du module consommateur d'énergie (108) jusqu'à l'île artificielle (102) en un seul bloc ;
la connexion du module de conditionnement d'énergie (106), par l'intermédiaire de la première interface, à la première fondation (202) sur l'île artificielle (102) pour sécuriser et fournir le support mécanique requis pour le module de conditionnement d'énergie (106) et pour connecter le module de conditionnement d'énergie (106) à la source de production d'énergie en mer (104) afin de permettre la fourniture d'énergie de la source de production d'énergie en mer (104) au module de conditionnement d'énergie (106) ; et
la connexion du module consommateur d'énergie (108), par l'intermédiaire de la seconde interface, à la seconde fondation (202) sur l'île artificielle (102) pour sécuriser et fournir le support mécanique requis pour le module consommateur d'énergie (108) et pour connecter le module consommateur d'énergie (108) au module de conditionnement d'énergie (106) afin de permettre au module consommateur d'énergie (108) de consommer l'énergie produite par la source de production d'énergie en mer (104).

11. Procédé selon la revendication 10, dans lequel le module de conditionnement d'énergie (106) comporte un transformateur, un dispositif de commutation et un onduleur ou bien un redresseur pour un système de transmission à courant continu haute tension.

12. Procédé selon la revendication 10 ou 11, dans lequel au moins l'un du module de conditionnement d'énergie (106) et du module consommateur d'énergie (108) est transporté sur une barge (206) jusqu'à l'île artificielle (102), le procédé comprenant en outre :
l'amarrage de la barge (206) transportant le module respectif (208) à de l'île artificielle (102) ou le positionnement de la barge (206) au sein d'un espace de déchargement (302) de l'île artificielle (102) ;
le positionnement d'un dispositif de transport (210) de manière à permettre le retrait du module respectif (208) de la barge (206), le dispositif de transport (210) comportant une paire de rails parallèles formant une partie permanente de la fondation (202) ; et
l'acheminement du module respectif (208) sur l'île artificielle (102) jusqu'à sa position de fonctionnement finale sur la fondation respective (202) à l'aide du dispositif de transport (210).

13. Procédé selon la revendication 10 ou 11, comprenant en outre la formation d'un espace de déchargement (302, 402) en tant que partie de l'île artificielle (102), et le positionnement de l'un du module de conditionnement d'énergie (106), d'un module énergie/gaz (110) et du module consommateur d'énergie (108) dans une position de fonctionnement qui traverse une partie de l'espace de déchargement (302, 402).

14. Procédé selon la revendication 10 ou 11, comprenant en outre la formation d'un espace de déchargement (302, 402) en tant que partie de l'île artificielle (102), et la mise en flottement d'au moins l'un du module de conditionnement d'énergie (106), d'un module énergie/gaz (110) et du module consommateur d'énergie (108) dans une position souhaitée à l'intérieur de l'espace de déchargement (302, 402) sur un transporteur.

15. Procédé selon la revendication 14, dans lequel le transporteur est un transporteur submersible (502), le procédé comprenant en outre l'ajout d'un ballast (506) au transporteur submersible (502) pour immerger au moins partiellement le transporteur submersible (502) dans l'espace de déchargement (302) pour positionner le module concerné parmi le module de conditionnement d'énergie (106), le module énergie/gaz (110) et le module consommateur d'énergie (108) dans une position de fonctionnement finale sur le transporteur submersible (502) dans l'espace de déchargement (302).
